# EUROPÄISCHE PATENTSCHRIFT

(11) **EP 2 951 360 B1**
(45) Veröffentlichungstag und Bekanntmachung des Hinweises auf die Patenterteilung: **13.02.2019**
(21) Anmeldenummer: 13805774.0
(22) Anmeldetag: 03.12.2013
(51) Int. Cl.: E03C 1/08, G05D 23/02, F16K 3/08, F16K 31/00, G05D 7/01, E03C 1/02, E03C 1/04

(54) **SANITÄRER DURCHFLUSSMENGENREGLER**
SANITARY WATER FLOW REGULATOR
REGULATEUR DE DEBIT SANITAIRE

(30) Priorität: 29.01.2013 DE 202013000860 U
(43) Veröffentlichungstag der Anmeldung: 09.12.2015
(73) Patentinhaber: Neoperl GmbH, 79379 Müllheim (DE)
(72) Erfinder: SCHÜRLE, Holger, 79379 Müllheim (DE); TEMPEL, Marc, 79111 Freiburg (DE)
(74) Vertreter: Börjes-Pestalozza, Henrich
(86) Internationale Anmeldenummer: PCT/EP2013/003641
(87) Internationale Veröffentlichungsnummer: WO 2014/117794

(56) Entgegenhaltungen:
- WO-A1-2011/006272
- FR-A- 1 137 522
- GB-A- 2 301 169
- US-A- 3 500 899
- US-A- 3 856 206
- US-A- 5 642 859

## Beschreibung

Die Erfindung betrifft ein sanitäres Einbauteil, mit einem Durchströmelement, in welchem wenigstens eine Durchströmöffnung ausgebildet ist, wobei die wenigstens eine Durchströmöffnung mit einem Abdeckelement freigebbar und zumindest teilweise verschließbar ist, welches Abdeckelement aus einem temperatursensitiven Regelelement besteht, wobei an dem Abdeckelement eine mit der wenigstens einen Durchströmöffnung zur Freigabe und zum zumindest teilweisen Verschluss zusammenwirkende Abdeckfläche ausgebildet ist, und wobei das Abdeckelement spiralförmig gebogen ausgeführt und/oder wandförmig ausgebildet ist.

Derartige sanitäre Einbauteile sind beispielsweise von belüfteten und unbelüfteten Strahlreglern bekannt. Hierbei ist es bekannt, das Abdeckelement temperaturabhängig anzusteuern, um ein unterschiedliches Durchströmungsverhalten bei unterschiedlichen Temperaturen des durchgeleiteten Wassers zu erreichen.

Aus US2012/90180875A1 ist ein Durchflussbegrenzer mit einer flachen Federzunge bekannt, wobei die Federzunge in Abhängigkeit von einem Differentialdruck eine Verengung verschließt.

In der GB 2 301 169 A ist ein sanitäres Einbauteil der eingangs erwähnten Art beschrieben, das geeignet ist zum Einbau in Duschköpfen, Mischbatterien und anderen Warmwasserhähnen, zur Verringerung der Strömung des Wassers, wenn die Temperatur einen vorgewählten Schwellenwert überschreitet.

Der Erfindung liegt die Aufgabe zugrunde, eine alternative Variante zu schaffen, mit welcher ein temperaturabhängiges Funktionsverhalten des sanitären Einbauteils erreichbar ist.

Zur Lösung sieht die Erfindung die Merkmale von Anspruch 1 vor. Insbesondere wird somit erfindungsgemäß zur Lösung der genannten Aufgabe bei einem sanitären Einbauteil der eingangs beschriebenen Art vorgeschlagen, dass das Abdeckelement aus einem temperatursensitiven Regelelement besteht, dass an dem Abdeckelement eine mit der wenigstens einen Durchströmöffnung zur Freigabe und zum zumindest teilweisen Verschluss zusammenwirkende Abdeckfläche ausgebildet ist, dass die wenigstens eine Durchströmöffnung radial zu einer Längsachse des sanitären Einbauteils ausgerichtet ist, und dass das Abdeckelement spiralförmig gebogen ausgeführt ist und/oder dass das Abdeckelement bandförmig ausgebildet ist. Von Vorteil ist dabei, dass zur Erreichung des temperaturabhängigen Funktionsverhaltens zusätzliche verstellbare Zusatzelemente verzichtbar sind. Somit sind sehr kleine Baumaße erreichbar. Von Vorteil ist weiter, dass eine geringe Teileanzahl zur Montage des sanitären Einbauteils erforderlich ist. Besonders günstig ist es, wenn die Abdeckfläche zum vollständigen Verschluss der Durchströmöffnung ausgebildet ist. Durch die Möglichkeit, das Abdeckelement temperatursensitiv zwischen einem die Durchströmöffnung freigebenden Zustand und einem die Durchströmöffnung zumindest teilweise, vorzugsweise vollständig, verschließenden Zustand zu schalten, ist ein Funktionsverhalten des sanitären Einbauteils auf einfache Weise temperatursensitiv einstellbar. Beispielsweise kann hierzu hinter der Durchströmöffnung in Durchströmrichtung eine weitere Funktionseinheit zugeordnet sein, welche durch Freigeben und Verschließen der Durchströmöffnung zuschaltbar und abschaltbar ist.

Durch die Verwendung eines temperatursensitiven Regelelements ist das Abdeckelement temperaturabhängig zwischen einem die Durchströmöffnung freigebenden Zustand und einem die Durchströmöffnung zumindest teilweise, vorzugsweise vollständig, verschließenden Zustand veränderbar oder schaltbar.

Das sanitäre Einbauteil kann beispielsweise ein belüfteter oder ein unbelüfteter Strahl- und/oder Mengenregler und/oder ein Ventil und/oder eine Drossel sein.

Bei einer Ausgestaltung der Erfindung kann vorgesehen sein, dass das Abdeckelement einstückig ausgebildet ist. Von Vorteil ist dabei, dass das Abdeckelement ohne zusätzliche Montageschritte direkt montierbar ist. Dies vereinfacht die Fertigung und reduziert das insgesamt erforderliche Baumaß.

Beispielsweise kann vorgesehen sein, dass das Abdeckelement ein Thermo-Bimetall aufweist. Thermo-Bimetalle stellen eine preiswerte und gut handhabbare Möglichkeit dar, eine Formveränderung des Abdeckelements zu erreichen.

Alternativ oder zusätzlich kann vorgesehen sein, dass das Abdeckelement ein Material mit Formgedächtnis (shape memory material) aufweist. Von Vorteil ist dabei, dass ein schlagartiges Umschalten bei Über- beziehungsweise Unterschreitung einer Temperaturschwelle, welche einen Phasenübergang in dem Material mit Formgedächtnis charakterisiert, erreichbar ist. Somit ist mit geringen Temperaturänderungen bereits eine makroskopische Bewegung oder Formveränderung des Abdeckelements erreichbar.

In einer Ausgestaltung der Erfindung kann vorgesehen sein, dass das temperatursensitive Regelelement temperaturabhängig formveränderlich ist. Von Vorteil ist dabei, dass der erwähnte freigebende Zustand und der ebenfalls erwähnte zumindest teilweise verschließende Zustand durch Formveränderung des Abdeckelements erreichbar sind.

Bei einer Ausgestaltung der Erfindung kann vorgesehen sein, dass eine Biegung des Abdeckelements temperaturveränderlich ist. Von Vorteil ist dabei, dass eine Formveränderung, mit welcher das Abdeckelement die wenigstens eine Durchströmöffnung in einem ersten Zustand freigibt und in einem zweiten Zustand zumindest teilweise verschließt, einfach erreichbar ist.

Bei einer Ausgestaltung der Erfindung kann vorgesehen sein, dass das Abdeckelement auf die wenigstens eine Durchströmöffnung flächig auflegbar ist. Von Vorteil ist dabei, dass ein vollständiger Verschluss der Durchströmöffnung erreichbar ist.

Beispielsweise kann vorgesehen sein, dass das temperatursensitive Regelelement des Abdeckelements temperaturabhängig einen harten Zustand einnimmt, in welchem es eine Kraft, die einer Strömung durch die wenigstens eine Durchströmöffnung entgegengerichtet ist, entwickelt. Von Vorteil ist dabei, dass ein Verschließen der durchströmten wenigstens einen Durchströmöffnung gegen die Strömung oder ein Öffnen oder Freigeben der wenigstens einen Durchströmöffnung gegen einen Wasserdruck auf das Abdeckelement temperaturabhängig erreichbar ist.

Bei einer Ausgestaltung der Erfindung kann vorgesehen sein, dass das Abdeckelement anströmseitig der wenigstens einen Durchströmöffnung angeordnet ist. Von Vorteil ist dabei, dass ein Abdeckelement einsetzbar ist, welches in verschließendem Zustand von einem die wenigstens eine Durchströmöffnung bildenden Bauteil abstützbar ist. Besonders günstig ist es hierbei, wenn bei Verwendung eines Materials mit Formgedächtnis als temperatursensitives Regelelement die erwähnte Kraft zur Erreichung des freigebenden Zustands eingerichtet ist.

Alternativ kann vorgesehen sein, dass das Abdeckelement abströmseitig der wenigstens einen Durchströmöffnung angeordnet ist. Von Vorteil ist dabei, dass ein selbsttätiges Freigeben der Durchströmöffnung durch eine strömende Flüssigkeit erreichbar ist. In diesem Fall kann bei Verwendung eines Materials mit Formgedächtnis als temperatursensitives Regelelement das temperatursensitive Material den harten Zustand in dem zumindest teilweise verschließenden Zustand einnehmen. Auf diese Weise kann das temperatursensitive Regelelement des Abdeckelements eine Kraft temperaturabhängig entwickeln, welche der Strömungsbewegung entgegengerichtet ist.

Bei einer Ausgestaltung der Erfindung kann vorgesehen sein, dass die wenigstens eine Durchströmöffnung einen Bypass zu einem Hauptströmpfad des sanitären Einbauteils bildet. Von Vorteil ist dabei, dass eine Durchflussmenge temperaturabhängig auf einfache Weise einstellbar ist.

Bei einer Ausgestaltung der Erfindung kann vorgesehen sein, dass die wenigstens eine Durchströmöffnung radial außerhalb eines, insbesondere des bereits erwähnten, Hauptströmpfads des sanitären Einbauteils angeordnet ist. Von Vorteil ist dabei, dass kompakte Funktionseinheiten im Hauptströmpfad verwendbar sind.

Bei einer Ausgestaltung der Erfindung kann vorgesehen sein, dass das Abdeckelement einen, insbesondere den bereits erwähnten, Hauptströmpfad des sanitären Einbauteils ringförmig umschließt. Bevorzugt sind hierzu mehrere Durchströmöffnungen ausgebildet, welche jeweils von dem Hauptströmpfad abzweigen. Von Vorteil ist dabei, dass ein gesamter oder vollständiger Umfang des Hauptströmpfads quer zu seiner Strömungsrichtung für die Ausbildung von weiteren Funktionseinheiten oder einem Bypass nutzbar ist.

Bei einer Ausgestaltung der Erfindung kann vorgesehen sein, dass das Abdeckelement an einem Ende an einem Gehäuseteil befestigt ist. Von Vorteil ist dabei, dass eine Formveränderung definiert ausführbar ist, indem das Abdeckelement an einem feststehenden Gehäuseteil abgestützt oder festgehalten ist.

Vorteilhaft kann es sein, wenn eine seitliche Abzweigung von einem Hauptströmpfad ausbildbar ist, wodurch eine kurze Baulänge erreichbar ist.

Hierbei oder allgemein kann vorgesehen sein, dass das Abdeckelement spiralförmig gebogen ausgeführt ist. Von Vorteil ist dabei, dass in einem kleinen Bauraum eine große Länge des temperatursensitiven Regelelements unterbringbar ist, so dass beispielsweise mit einem Thermo-Bimetall auch bei kleinen Temperaturänderungen makroskopische Formveränderungen erreichbar sind. Durch diese makroskopischen Formveränderungen ist das Abdeckelement zwischen dem freigebenden Zustand und dem zumindest teilweise verschließenden Zustand schaltbar.

Bei einer Ausgestaltung der Erfindung kann vorgesehen sein, dass das Abdeckelement bandförmig ausgebildet ist. Von Vorteil ist dabei, dass eine Vielzahl von Abdeckflächen an dem Abdeckelement ausbildbar sind, welche jeweils eine Durchströmöffnung temperaturabhängig freigeben oder zumindest teilweise verschließen.

Die Begriffe "radial" und "axial" sind - sofern nichts anderes gesagt ist - auf eine Längsachse des sanitären Einbauteils bezogen.

Bei der Ausgestaltung der Erfindung kann vorgesehen sein, dass das Abdeckelement in einer topfförmigen Aufnahme mit einer runden Aufnahmewand eingespannt ist, wobei die wenigstens eine Durchströmöffnung in der runden Aufnahmewand ausgebildet ist. Von Vorteil ist dabei, dass auf einfache Weise eine Abstützung des Abdeckelements, beispielsweise durch einen Boden der topfförmigen Aufnahme, erreichbar ist. Von Vorteil ist weiter, dass radial ausgerichtete Durchströmöffnungen einfach ausbildbar sind.

Besonders günstig ist es, wenn mit dem Abdeckelement mehrere Durchströmöffnungen verschließbar und freigebbar sind. Von Vorteil ist dabei, dass ein freigebbarer Strömungsquerschnitt vergrößerbar ist.

Die Erfindung wird nun anhand eines Ausführungsbeispieles beschrieben, ist jedoch nicht auf dieses Ausführungsbeispiel beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele.

Es zeigt:
- Fig. 1: ein erfindungsgemäßes sanitäres Einbauteil mit freigebendem und zumindest teilweise verschließendem Abdeckelement in unterschiedlichen Ansichten, und
- Fig. 2: das sanitäre Einbauteil gemäß Figur 1 in freigebendem und zumindest teilweise verschließendem Zustand des Abdeckelements in Explosionsdarstellung.

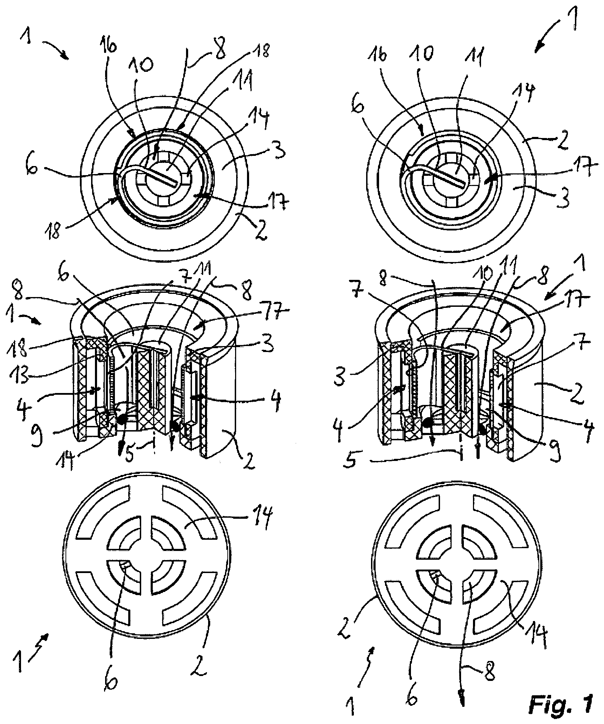

Figur 1 zeigt ein im Ganzen mit 1 bezeichnetes sanitäres Einbauteil mit einer Außenhülse 2, welche in an sich bekannter Weise zur Montage im Auslauf einer Armatur oder an einer anderen Stelle eines wasserführenden Systems eingerichtet ist.

In die Außenhülse 2 ist ein ebenfalls hülsenförmiges Durchströmelement 3 eingesetzt.

In dem Durchströmelement 3 sind Durchströmöffnungen 4 ausgebildet.

Bei dem gezeigten Ausführungsbeispiel sind zehn entlang eines Umfangs verteilte Durchströmöffnungen 4 ausgebildet. Bei weiteren Ausführungsbeispielen ist eine andere Anzahl von Durchströmöffnungen 4 ausgebildet.

Die Durchströmöffnungen 4 sind in Bezug auf eine Längsachse 5 des Einbauteils 1 radial ausgerichtet.

Die Durchströmöffnungen 4 sind mit einem Abdeckelement 6 freigebbar und zumindest teilweise verschließbar.

Das Abdeckelement 6 ist hierbei aus einem temperatursensitiven Material gefertigt.

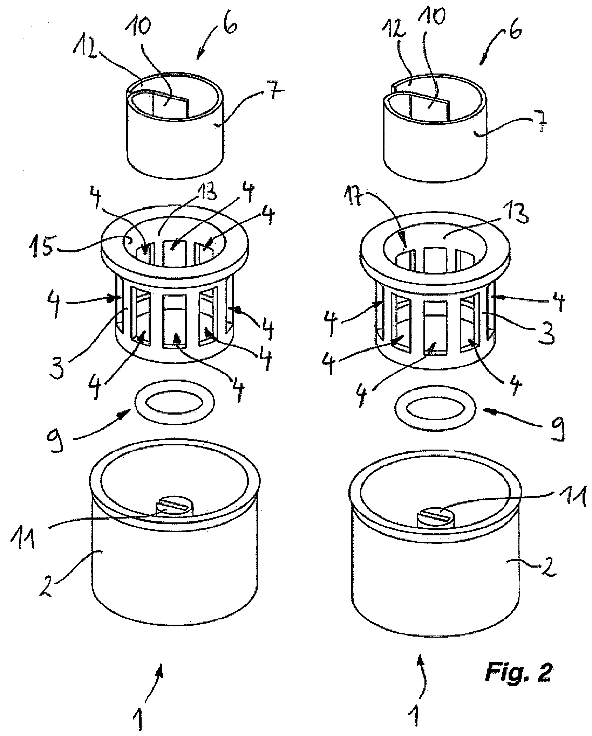

Figur 1 und Figur 2 zeigen das Abdeckelement 6 in der linken Zeichnungshälfte in einem Zustand, in welchem die Durchströmöffnungen 4 freigegeben sind.

Figuren 1 und 2 zeigen in: der jeweiligen rechten Zeichnungshälfte das Abdeckelement 6 in einem Zustand, in welchem die Durchströmöffnungen 4 verschlossen sind.

Figur 1 zeigt von oben nach unten das Einbauteil 1 anströmseitig, in einer teilweise aufgeschnitten dreidimensionalen Schrägansicht und abströmseitig.

An dem Abdeckelement 6 sind radial außenseitig Abdeckflächen 7 ausgebildet, die auf die Durchströmöffnungen 4 abgestimmt sind. Diese Abdeckflächen 7 wirken mit den Durchströmöffnungen 4 zusammen, um die Durchströmöffnungen 4 je nach Zustand des Abdeckelements 6 freizugeben oder zu verschließen.

Das temperatursensitive Material des Abdeckelements 6 bewirkt hierbei, dass in einem ersten Temperaturbereich der Zustand gemäß der linken Bildhälfte von Figur 1, also der freigebende Zustand, eingenommen wird, während in einem zweiten Temperaturbereich, beispielsweise einem höheren Temperaturbereich, der verschließende Zustand gemäß der rechten Bildhälfte von Figur 1 eingenommen wird.

Aus Figur 1 und Figur 2 ist ersichtlich, dass das Abdeckelement 6 einstückig ausgebildet ist. Das Abdeckelement 6 ist als spiralförmig gebogene Zunge 16 geformt.

Das temperatursensitive Material des Abdeckelements 6 verursacht hierbei temperaturabhängig eine Formveränderung des Abdeckelements 6, die in Figur 2 beispielsweise an einem geänderten Umfang des Abdeckelements 6 sichtbar ist.

Die Zunge 16 bildet im freigebenden Zustand des Abdeckelements 6 gemäß der linken Zeichnungshälften der Figuren 1 und 2 einen Spalt 18. Durch den Spalt 18 kann Wasser in die Durchströmöffnungen 4 strömen. In dem verschließenden Zustand des Abdeckelements 6 gemäß der rechten Zeichnungshälften der Figuren 1 und 2 ist der Spalt 18 geschlossen, und das Abdeckelement 6 verschließt die Durchströmöffnungen 4.

In dem vorgestellten Ausführungsbeispiel ist das Abdeckelement 6 aus einem Thermo-Bimetall gefertigt beziehungsweise weist ein solches Thermo-Bimetall auf.

Hierdurch wird erreicht, dass die Biegung des Abdeckelements 6 temperaturveränderlich ist, so dass das Abdeckelement 6 in Figur 2 in der rechten Bildhälfte einen größeren Umfang aufweist als in der linken Bildhälfte.

Somit liegt das Abdeckelement 6 mit seinen an dem Abdeckelement 6 ausgebildeten Abdeckflächen 7 flächig an den Durchströmöffnungen 4 an, um diese zu verschließen.

Das sanitäre Einbauteil 1 weist einen Hauptströmpfad 8 auf, durch welchen das Wasser in jedem Zustand des Abdeckelements 6 strömt. Es ist ersichtlich, dass das Abdeckelement 6 anströmseitig der Durchströmöffnungen 4 angeordnet ist.

Im Hauptströmpfad 8 ist eine an sich bekannte Funktionseinheit 9, hier als Mengenreglereinheit gezeigt, angeordnet. Bei weiteren Ausführungsbeispielen kann diese Mengenreglereinheit beispielsweise durch eine Strahlformungseinheit und/oder eine Strahlbelüftungseinheit oder durch eine andere Funktionseinheit ersetzt oder ergänzt sein.

Mit den freigebbaren Durchströmöffnungen 4 ist die Möglichkeit eines Bypasses zu diesem Hauptströmpfad 8 und der Funktionseinheit 9 geschaffen.

Die Durchströmöffnungen 4 sind hierbei radial außerhalb des Hauptströmpfads 8 des sanitären Einbauteils angeordnet.

Das Abdeckelement 6 umschließt diesen Hauptströmpfad 8 des sanitären Einbauteils 1 ringförmig radial außenseitig.

Das Abdeckelement 6 ist mit einem festen Ende 10, dem inneren Ende der Spiralform, an einem Gehäuseteil 11 befestigt.

Mit seinem freien Ende 12 stützt sich das spiralförmig gebogene Abdeckelement 6 an dem Durchströmelement 3 ab.

Insgesamt ist das Abdeckelement 6 somit in einer topfförmigen Aufnahme 17 angeordnet, welche durch eine runde Aufnahmewand 13 des Durchströmelements 6 und einen Boden 14 gebildet ist.

Der Boden 14 dieser topfförmigen Aufnahme 17 stützt das Abdeckelement 6 ab und trägt den dornförmigen Gehäuseteil 11.

Der Boden 14 ist mit der Außenhülse 2 fest verbunden.

Die Aufnahmewand 13 bildet somit Auflagen 15 für die Abdeckflächen 7 zum Verschluss der Durchströmöffnungen 4. Der Spalt 18 ist im freigebenden Zustand des Abdeckelements 6 somit zwischen der Zunge 16 und den Auflagen 15 ausgebildet.

Bei dem hier beschriebenen Ausführungsbeispiel und bei weiteren Ausführungsbeispielen sind die Durchströmöffnungen 4 schlitzförmig ausgebildet. Hierbei kann sich der Öffnungsquerschnitt der Durchströmöffnungen 4 vom Abdeckelement 6 weg vergrößern.

Bei weiteren Ausführungsbeispielen sind die Abdeckelemente 6 abströmseitig der Durchströmöffnungen 4 angeordnet.

Bei dem sanitären Einbauteil 1 wird vorgeschlagen, an einem Abdeckelement 6 aus einem temperatursensitiven Material wenigstens eine Abdeckfläche 7 auszubilden, mit welcher wenigstens eine Durchströmöffnung 4 eines Durchströmelements 3 temperaturabhängig freigebbar und zumindest teilweise verschließbar ist.

### Bezugszeichenliste

- 1: sanitäres Einbauteil
- 2: Außenhülse
- 3: Durchströmelement
- 4: Durchströmöffnung
- 5: Längsachse
- 6: Abdeckelement
- 7: Abdeckfläche
- 8: Hauptströmpfad
- 9: Funktionseinheit
- 10: festes Ende
- 11: Gehäuseteil
- 12: freies Ende
- 13: Aufnahmewand
- 14: Boden
- 15: Auflage
- 16: Zunge
- 17: Aufnahme
- 18: Spalt

## Patentansprüche

1. Sanitäres Einbauteil (1), mit einem Durchströmelement (3), in welchem wenigstens eine Durchströmöffnung (4) ausgebildet ist, wobei die wenigstens eine Durchströmöffnung (4) mit einem Abdeckelement (6) freigebbar und zumindest teilweise verschließbar ist, welches Abdeckelement (6) aus einem temperatursensitiven Regelelement besteht, wobei an dem Abdeckelement (6) eine mit der wenigstens einen Durchströmöffnung (4) zur Freigabe und zum zumindest teilweisen Verschluss zusammenwirkende Abdeckfläche (7) ausgebildet ist, und wobei das Abdeckelement (6) spiralförmig gebogen ausgeführt und/oder bandförmig ausgebildet ist, **dadurch gekennzeichnet, dass** die wenigstens eine Durchströmöffnung (4) radial zu einer Längsachse (5) des Durchströmelements (6) des sanitären Einbauteils (1) ausgerichtet ist.

2. Sanitäres Einbauteil (1) nach Anspruch 1, **dadurch gekennzeichnet, dass** das Abdeckelement (6) einstückig ausgebildet ist und/oder dass das temperatursensitive Regelelement temperaturabhängig formveränderlich ist.

3. Sanitäres Einbauteil (1) nach Anspruch 1 oder 2, **dadurch gekennzeichnet, dass** das Abdeckelement (6) ein Thermo-Bimetall und/oder ein Material mit Formgedächtnis aufweist.

4. Sanitäres Einbauteil (1) nach einem der Ansprüche 1 bis 3, **dadurch gekennzeichnet, dass** eine Biegung des Abdeckelements (6) temperaturveränderlich ist und/oder dass das Abdeckelement (6) auf die wenigstens eine Durchströmöffnung (4) flächig auflegbar ist.

5. Sanitäres Einbauteil (1) nach einem der Ansprüche 1 bis 4, **dadurch gekennzeichnet, dass** das Abdeckelement (6) anströmseitig oder abströmseitig der wenigstens einen Durchströmöffnung (4) angeordnet ist.

6. Sanitäres Einbauteil (1) nach einem der Ansprüche 1 bis 5, **dadurch gekennzeichnet, dass** die wenigstens eine Durchströmöffnung (4) einen Bypass zu einem Hauptströmpfad (8) des sanitären Einbauteils (1) bildet.

7. Sanitäres Einbauteil (1) nach Anspruch 6, **dadurch gekennzeichnet, dass** die wenigstens eine Durchströmöffnung (4) radial außerhalb des Hauptströmpfads (8) des sanitären Einbauteils (1) angeordnet ist.

8. Sanitäres Einbauteil (1) nach Anspruch 6 oder 7, **dadurch gekennzeichnet, dass** das Abdeckelement (6) den Hauptströmpfad (8) des sanitären Einbauteils (1) ringförmig umschließt.

9. Sanitäres Einbauteil (1) nach einem der Ansprüche 1 bis 8, **dadurch gekennzeichnet, dass** das Abdeckelement (6) an einem Ende (10) an einem Gehäuseteil (11) des Durchströmelements(6) befestigt ist.

10. Sanitäres Einbauteil (1) nach Anspruch 9, **dadurch gekennzeichnet, dass** das Abdeckelement (6) in einer topfförmigen Aufnahme (17) mit einer runden Aufnahmewand (13) eingespannt ist, wobei die wenigstens eine Durchströmöffnung (4) in der runden Aufnahmewand (13) ausgebildet ist.

11. Sanitäres Einbauteil (1) nach einem der Ansprüche 1 bis 10, **dadurch gekennzeichnet, dass** mit dem Abdeckelement (6) mehrere Durchströmöffnungen (4) verschließbar und freigebbar sind.

## Claims

1. Sanitary fixture (1), with a throughflow element (3) in which at least one throughflow opening (4) is formed, wherein the at least one throughflow opening (4) is releasable and at least partially closeable by a covering element (6), which covering element (6) is composed of a temperature-sensitive regulating element, wherein a covering surface (7) interacting with the at least one throughflow opening (4) for the release and for the at least partial closure is formed on the covering element (6), and wherein the covering element (6) is realized in a spirally curved manner, and/or is in the shape of a band, **characterized in that** the at least one throughflow opening (4) is oriented radially with respect to a longitudinal axis (5) of the throughflow element (6) of the sanitary fixture (1).

2. Sanitary fixture (1) according to Claim 1, **characterized in that** the covering element (6) is formed as a single piece, and/or **in that** the temperature-sensitive regulating element is variable in shape depending on the temperature.

3. Sanitary fixture (1) according to Claim 1 or 2, **characterized in that** the covering element (6) has a thermostatic bimetal and/or a material with shape memory.

4. Sanitary fixture (1) according to one of Claims 1 to 3, **characterized in that** a bending of the covering element (6) is temperature-variable, and/or **in that** the covering element (6) is placeable flat onto the at least one throughflow opening (4).

5. Sanitary fixture (1) according to one of Claims 1 to 4, **characterized in that** the covering element (6) is arranged on the approach flow side or discharge flow side of the at least one throughflow opening (4).

6. Sanitary fixture (1) according to one of Claims 1 to 5, **characterized in that** the at least one throughflow opening (4) forms a bypass to a main flow path (8) of the sanitary fixture (1).

7. Sanitary fixture (1) according to Claim 6, **characterized in that** the at least one throughflow opening (4) is arranged radially outside the main flow path (8) of the sanitary fixture (1).

8. Sanitary fixture (1) according to Claim 6 or 7, **characterized in that** the covering element (6) annularly surrounds the main flow path (8) of the sanitary fixture (1).

9. Sanitary fixture (1) according to one of Claims 1 to 8, **characterized in that** the covering element (6) is fastened at one end (10) to a housing part (11) of the throughflow element (6).

10. Sanitary fixture (1) according to Claim 9, **characterized in that** the covering element (6) is clamped in a cup-shaped receptacle (17) having a round receptacle wall (13), wherein the at least one throughflow opening (4) is formed in the round receptacle wall (13).

11. Sanitary fixture (1) according to one of Claims 1 to 10, **characterized in that** a plurality of throughflow openings (4) are closeable and releasable by the covering element (6).

## Revendications

1. Pièce d'insertion sanitaire (1), avec un élément d'écoulement (3), dans lequel est formée au moins une ouverture d'écoulement (4), dans laquelle ladite au moins une ouverture d'écoulement (4) peut être libérée et au moins partiellement fermée avec un élément de recouvrement (6), élément de recouvrement (6) qui se compose d'un élément de régulation sensible à la température, dans laquelle une face de recouvrement (7) coopérant avec ladite au moins une ouverture de passage (4) pour la libération et la fermeture au moins partielle est formée sur l'élément de recouvrement (6), et dans laquelle l'élément de recouvrement (6) est incurvé en spirale et/ou est réalisé en forme de bande, **caractérisée en ce que** ladite au moins une ouverture de passage (4) est orientée radialement par rapport à un axe longitudinal (5) de l'élément d'écoulement (6) de la pièce d'insertion sanitaire (1).

2. Pièce d'insertion sanitaire (1) selon la revendication 1, **caractérisée en ce que** l'élément de recouvrement (6) est réalisé en une seule pièce et/ou **en ce que** l'élément de régulation sensible à la température peut changer de forme en fonction de la température.

3. Pièce d'insertion sanitaire (1) selon la revendication 1 ou 2, **caractérisée en ce que** l'élément de recouvrement (6) présente un bimétal thermique et/ou un matériau à mémoire de forme.

4. Pièce d'insertion sanitaire (1) selon l'une quelconque des revendications 1 à 3, **caractérisée en ce qu'**une flexion de l'élément de recouvrement (6) est variable avec la température et/ou **en ce que** l'élément de recouvrement (6) est posé à plat sur ladite au moins une ouverture d'écoulement (4).

5. Pièce d'insertion sanitaire (1) selon l'une quelconque des revendications 1 à 4, **caractérisée en ce que** l'élément de recouvrement (6) est disposé à l'amont ou à l'aval de ladite au moins une ouverture d'écoulement (4).

6. Pièce d'insertion sanitaire (1) selon l'une quelconque des revendications 1 à 5, **caractérisée en ce que** ladite au moins une ouverture d'écoulement (4) forme une dérivation à un chemin d'écoulement principal (8) de la pièce d'insertion sanitaire (1).

7. Pièce d'insertion sanitaire (1) selon la revendication 6, **caractérisée en ce que** ladite au moins une ouverture d'écoulement (4) est disposée radialement à l'extérieur du chemin d'écoulement principal (8) de la pièce d'insertion sanitaire (1).

8. Pièce d'insertion sanitaire (1) selon la revendication 6 ou 7, **caractérisée en ce que** l'élément de recouvrement (6) ferme sous forme annulaire le chemin d'écoulement principal (8) de la pièce d'insertion sanitaire (1).

9. Pièce d'insertion sanitaire (1) selon l'une quelconque des revendications 1 à 8, **caractérisée en ce que** l'élément de recouvrement (6) est fixé par une extrémité (10) à une partie de boîtier (11) de l'élément d'écoulement (6).

10. Pièce d'insertion sanitaire (1) selon la revendication 9, **caractérisée en ce que** l'élément de recouvrement (6) est serré dans un logement en forme de godet (17) avec une paroi de logement ronde (13), dans laquelle ladite au moins une ouverture d'écoulement (4) est formée dans la paroi de logement ronde (13).

11. Pièce d'insertion sanitaire (1) selon l'une quelconque des revendications 1 à 10, **caractérisée en ce que** plusieurs ouvertures d'écoulement (4) peuvent être fermées et libérées avec l'élément de recouvrement (6).
